(19) Europäisches Patentamt
European Patent Office
Office européen des brevets

(11) EP 3 324 061 A1

(12) EUROPEAN PATENT APPLICATION

(43) Date of publication:
23.05.2018 Bulletin 2018/21

(51) Int Cl.:
F16C 9/02 (2006.01)        F16C 17/02 (2006.01)
F16C 33/04 (2006.01)       F16C 33/10 (2006.01)

(21) Application number: 17201153.8

(22) Date of filing: 10.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.11.2016 JP 2016225479

(71) Applicants:
• TOYOTA JIDOSHA KABUSHIKI KAISHA
Toyota-shi, Aichi, 471-8571 (JP)

• Taiho Kogyo Co., Ltd.
Toyota-shi
Aichi 471-8502 (JP)

(72) Inventors:
• MORITA, Yusuke
Toyota-shi, Aichi 471-8571 (JP)
• KUBOTA, Tsutomu
Toyota-City, Aichi 471-8502 (JP)
• NAMBA, Tadashi
Toyota-city, Aichi 471-8502 (JP)

(74) Representative: D Young & Co LLP
120 Holborn
London EC1N 2DY (GB)

(54) **SLIDE BEARING**

(57)     A slide bearing (1) configured to support a crankshaft or a crankpin includes: a halved upper bearing body (10) which is disposed on the upper side in an up-and-down movement direction of a piston; and a halved lower bearing body (20) which is disposed on the lower side in the up-and-down movement direction. The upper bearing body (10) includes an upper sliding surface (12) having an upper oil groove (14) disposed along a circumferential direction of the upper sliding surface (12) at a central portion in an axial direction of the upper sliding surface (12). The lower bearing body (20) includes a lower sliding surface (22) that configures, along with the upper sliding surface (12), a cylindrical sliding surface that rotatably supports the crankshaft or the crankpin through an oil film, and the axial width ($\gamma$) of the lower sliding surface (22) is narrower than the axial width ($\alpha$) including the oil groove (14) of the upper sliding surface (12).

FIG. 2A

EP 3 324 061 A1

## Description

BACKGROUND OF THE INVENTION

1. Field of the Invention

The invention relates to a slide bearing that supports a crankshaft or a crankpin of an internal combustion engine.

2. Description of Related Art

In a slide bearing that supports a crankshaft or a crankpin of an internal combustion engine, a slide bearing of a type in which an oil groove is formed merely on a sliding surface of an upper bearing body among a pair of halved upper and lower bearing bodies and an oil groove is not formed on a sliding surface of a lower bearing body is generally used. In many cases, the oil groove of the upper bearing body is generally disposed along a circumferential direction at a central portion in an axial direction of the sliding surface. In this specification, the upper bearing body means a bearing body that is disposed on the upper side in an up-and-down movement direction of a piston among the bearing bodies, and the lower bearing body means a bearing body that is disposed on the lower side in the same direction among the bearing bodies.

However, in the structure of the general slide bearing described above, a trace of a shaft center of a rotating body that is supported is shifted toward the upper bearing body side during operation of an internal combustion engine, and there is a case where a problem such as deterioration of fuel economy or seizure due to an increase in friction due to the shift occurs. This is because the oil groove is formed on the sliding surface of the upper bearing body. During the operation of the internal combustion engine, the rotating body such as the crankshaft is supported by oil film pressure that is generated in an oil film between the sliding surface and the rotating body. The oil film pressure depends on the distance from the sliding surface to the surface of the rotating body, and therefore, when an oil groove is formed on the sliding surface, the oil film pressure partially drops in the oil groove. Therefore, in the general slide bearing described above, the load capacity of the upper bearing body becomes smaller than that of the lower bearing body, and as a result, the trace of the shaft center of the rotating body is shifted toward the upper bearing body side.

In order to suppress the friction from excessively increasing, it is needed to return the trace of the shaft center of the rotating body shifted toward the upper bearing body side to the center. As means for returning the trace of the shaft center to the center, for example, the structure of a slide bearing disclosed in Japanese Unexamined Patent Application Publication No. 2005-249024 (JP 2005-249024 A) can be considered. If the same oil groove as the oil groove formed on the sliding surface of the upper bearing body is also formed in the lower bearing body, the load capacity can be aligned between the upper bearing body and the lower bearing body. According to this, the load capacity of the lower bearing body is lowered as compared with that in the general slide bearing, and therefore, it appears that the trace of the shaft center of the rotating shaft is maintained to be near the center.

However, in fact, in the structure described in the above-mentioned publication, contrary to the case of the general slide bearing, the trace of the shaft center of the rotating body is shifted further toward the lower bearing body side than the center. This is because in a slide bearing supporting a crankshaft or a crankpin, an explosion load that a piston receives acts to be concentrated in the lower bearing body. That is, in a slide bearing in which an oil groove is formed on a sliding surface of a lower bearing body, the load capacity of the lower bearing body excessively decreases, and thus oil film pressure cannot support the rotating body against an explosion load.

SUMMARY OF THE INVENTION

The invention provides a slide bearing in which it is possible to suppress the occurrence of bias in a trace of a shaft center of a crankshaft or a crankpin during operation of an internal combustion engine.

An aspect of the invention relates to a slide bearing configured to support a crankshaft or a crankpin of an internal combustion engine. The slide bearing includes a halved upper bearing body which is disposed on the upper side in an up-and-down movement direction of a piston of the internal combustion engine; and a halved lower bearing body which is disposed on the lower side in the up-and-down movement direction. The upper bearing body includes an upper sliding surface, and the upper sliding surface has an upper oil groove disposed along a circumferential direction of the upper sliding surface at a central portion in an axial direction of the upper sliding surface. The lower bearing body includes a lower sliding surface, and the lower sliding surface configures, along with the upper sliding surface, a cylindrical sliding surface that rotatably supports the crankshaft or the crankpin through an oil film. The axial width of the lower sliding surface is narrower than the axial width including the oil groove of the upper sliding surface.

In the general slide bearing, the axial width of the sliding surface of the lower bearing body is the same as the axial width including the oil groove of the sliding surface of the upper bearing body. In contrast, in the slide bearing according to the aspect of the invention, as described above, the axial width of the sliding surface of the lower bearing body is narrower than the axial width including the oil groove of the sliding surface of the upper bearing body. For this reason, the load capacity of the sliding surface of the lower bearing body becomes lower than that in the general slide bearing, and therefore, the trace of the shaft center of the crankshaft or the crankpin is also suppressed from being biased toward the upper bearing body side.

Further, with the slide bearing according to the aspect of the invention, an oil groove is not formed on the sliding surface of the lower bearing body and the axial width of the sliding surface of the lower bearing body is made to be narrower than the axial width including the oil groove of the sliding surface of the upper bearing body, whereby the area of the sliding surface is reduced. Even though the total area is the same, in two sliding surfaces divided by the oil groove and a single sliding surface without an oil groove, the load capacity is higher on the side of the single sliding surface without an oil groove because there is no partial drop of the oil film pressure at the central portion. Therefore, the load capacity of the sliding surface of the lower bearing body does not become as low as that in the slide bearing described in the above-mentioned publication, and therefore, the trace of the shaft center of the crankshaft or the crankpin is also suppressed from being biased toward the lower bearing body side.

As described above, with the slide bearing according to the aspect of the invention, the trace of the shaft center of the crankshaft or the crankpin is suppressed from being biased toward one side, and therefore, it is possible to suppress deterioration of fuel economy or seizure due to an increase in friction.

In the slide bearing according to the aspect of the invention, the lower bearing body may have steps provided along the circumferential direction at both edge portions in the axial direction of the lower sliding surface of the lower bearing body.

In the slide bearing according to the aspect of the invention, the lower bearing body may have cutouts provided along the circumferential direction at both edge portions in the axial direction of the lower sliding surface of the lower bearing body.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is an exploded perspective view of a slide bearing according to an embodiment of the invention;
FIG. 2A is a plan view of two bearing bodies configuring the slide bearing according to the embodiment of the invention;
FIG. 2B is a cross-sectional view taken along line IIB-IIB of an upper bearing body configuring the slide bearing according to the embodiment of the invention;
FIG. 2C is a cross-sectional view taken along line IIC-IIC of a lower bearing body configuring the slide bearing according to the embodiment of the invention;
FIG. 3A is a diagram showing an oil film pressure distribution of a bearing body as a comparative example;
FIG. 3B is a diagram showing an oil film pressure distribution of the upper bearing body;
FIG. 3C is a diagram showing an oil film pressure distribution of the lower bearing body;
FIG. 4 is a diagram showing the relationship between the width of a sliding surface of the lower bearing body and the minimum oil film thickness between each bearing body and a rotating body;
FIG. 5 is a cross-sectional view of a first modification example of the lower bearing body configuring the slide bearing according to the embodiment of the invention; and
FIG. 6 is a plan view of a second modification example of the lower bearing body configuring the slide bearing according to the embodiment of the invention.

DETAILED DESCRIPTION OF EMBODIMENTS

1. Structure of Slide Bearing

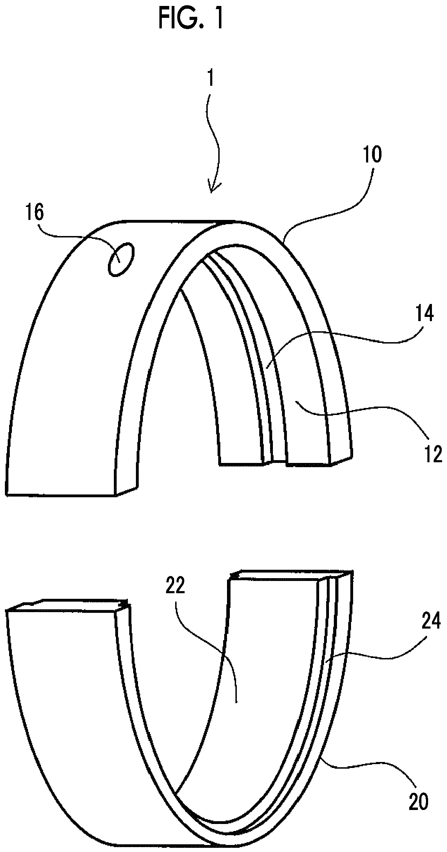

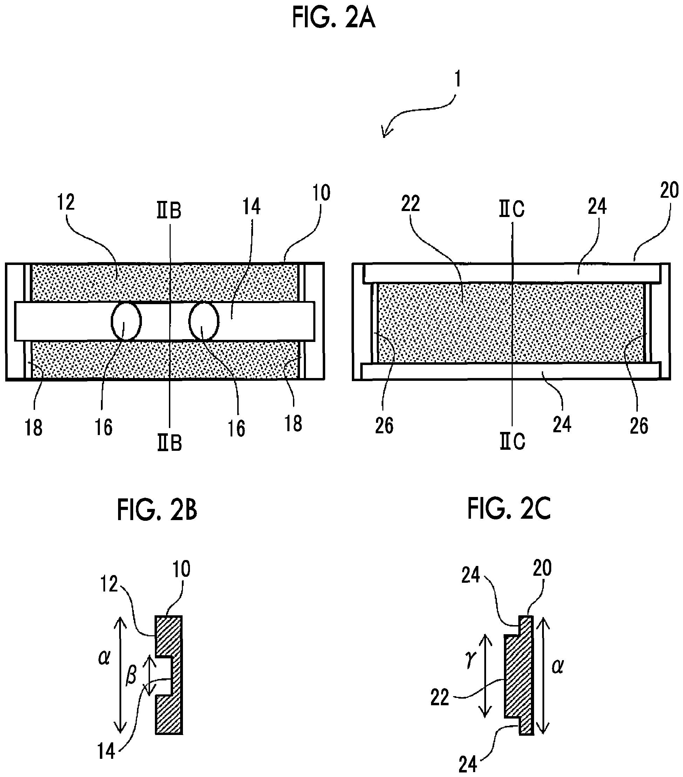

Hereinafter, the structure of a slide bearing according to an embodiment of the invention will be described with reference to FIGS. 1 and 2A to 2C.

FIG. 1 is an exploded perspective view of a slide bearing 1 according to an embodiment of the invention. The slide bearing 1 is a cylindrical part that rotatably supports a crankshaft or a crankpin of an internal combustion engine (not shown). The slide bearing 1 is composed of a pair of halved bearing bodies 10, 20 that is obtained by splitting a cylinder into two halves in a plane that includes an axis of the cylinder. A cylindrical sliding surface is formed by a sliding surface 12 of an upper bearing body 10 and a sliding surface 22 of a lower bearing body 20. Hereinafter, the sliding surface 12 of the upper bearing body 10 is referred to as an upper sliding surface 12, and the sliding surface 22 of the lower bearing body 20 is referred to as a lower sliding surface 22.

An oil groove 14 is formed on the upper sliding surface 12. Oil holes 16 for supplying lubricating oil to the oil groove 14 are formed to penetrate the upper bearing body 10 at one or a plurality of locations (in FIG. 2A, two locations) of the oil groove 14. On the other hand, an oil groove is not formed on the lower sliding surface 22. A slight gap is provided between a rotating body (that is, the crankshaft or the crankpin) that is supported by the slide bearing 1 and each of the sliding surfaces 12, 22. During the operation of the internal combustion engine, an oil film of the lubricating oil is formed in the gap between the rotating body and each of the sliding surfaces 12, 22, and the rotating body is supported on the sliding surfaces 12, 22 through the oil films.

The detailed structure of the upper bearing body 10 is shown in FIGS. 2A and 2B. A plan view of the upper bearing body 10 is shown in FIG. 2A, and a cross-sectional view taken along line IIB-IIB of the upper bearing body 10 is shown in FIG. 2B. As shown in FIGS. 2A and 2B, in the upper bearing body 10, the oil groove 14 is disposed along a circumferential direction at a central portion in an axial direction of the upper bearing body 10. The axial width including the oil groove 14, of the upper sliding surface 12, is set to be $\alpha$, and the axial width of the oil groove 14 is set to be $\beta$. In FIG. 2A, the oil groove 14 reaches both end portions of the upper bearing body 10. However, it is not indispensable for the oil groove 14 to reach the end portions. Crush reliefs 18 formed by notching edges on the upper sliding surface 12 side are provided at both end portions in the circumferential direction of the upper bearing body 10, that is, abutting portions to the lower bearing body 20.

The detailed structure of the lower bearing body 20 is shown in FIGS. 2A and 2C. A plan view of the lower bearing body 20 is shown in FIG. 2A, and a cross-sectional view taken along line IIC-IIC of the lower bearing body 20 is shown in FIG. 2C. As shown in FIGS. 2A and 2C, an oil groove is not formed in the lower bearing body 20. However, steps 24 are provided along the circumferential direction in both edge portions of the lower sliding surface 22. The steps 24 are provided, whereby an axial width $\gamma$ of the lower sliding surface 22 becomes narrower than the axial width $\alpha$ of the upper sliding surface 12. Specifically, the axial width of the lower bearing body 20 itself is the same as the axial width of the upper bearing body 10, and merely the width of the lower sliding surface 22 is made to be narrow. The depth of each of the steps 24 is approximately the same as the depth of the oil groove 14 of the upper bearing body 10. Crush reliefs 26 formed by notching edges on the lower sliding surface 22 side are provided at both end portions in the circumferential direction of the lower bearing body 20, that is, abutting portions to the upper bearing body 10.

2. Operation and Effects of Slide Bearing

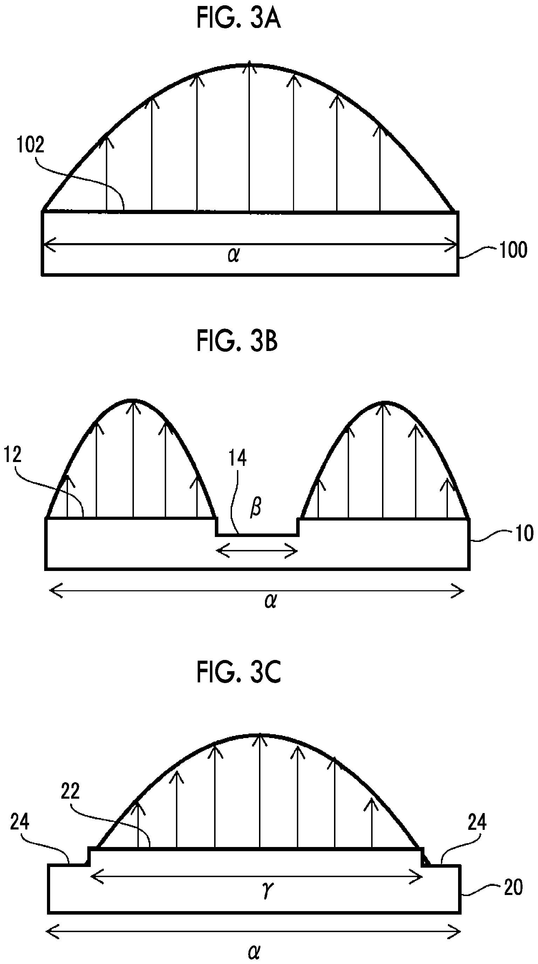

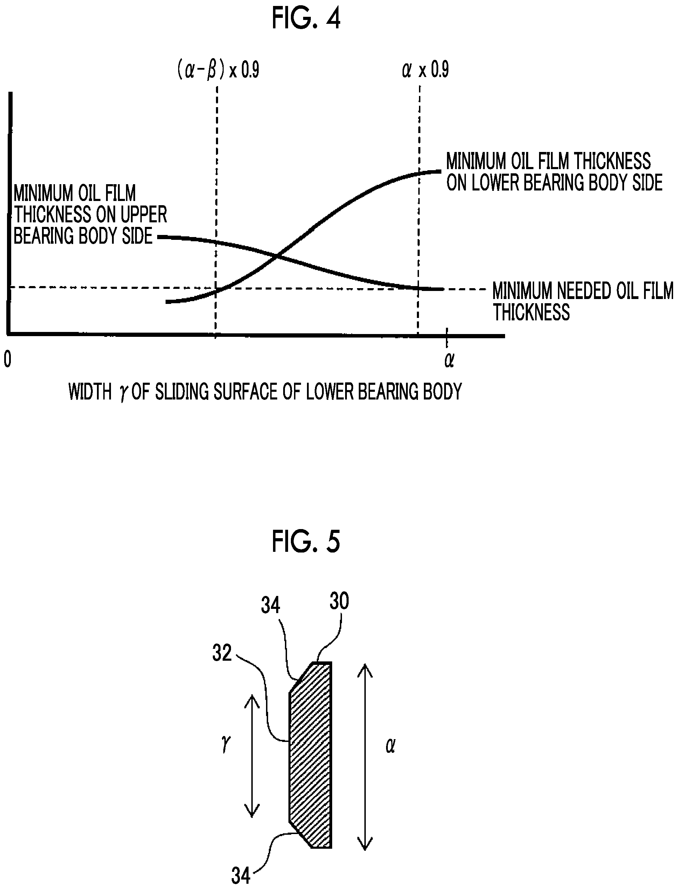

Next, the operation and effects of the slide bearing 1 that is obtained with the structure described above will be described with reference to FIGS. 3A to 3C, and 4.
FIG. 3A is a diagram showing an oil film pressure distribution of a bearing body, which is generated on a sliding surface of a comparative example during operation of an internal combustion engine. The comparative example shown in FIG. 3A may be regarded as an oil film pressure distribution that is generated in a lower bearing body 100 in a general slide bearing that is currently used. As shown in FIG. 3A, oil film pressure that is generated on a single continuous sliding surface 102 becomes the maximum at a central portion in the axial direction and becomes zero at both ends in the axial direction. The oil film pressure integrated in the axial direction, that is, the area of the oil film pressure distribution indicates the magnitude of a force with which the sliding surface holds the rotating body.
FIG. 3B is a diagram showing an oil film pressure distribution in the axial direction, which is generated in the upper sliding surface 12 during the operation of the internal combustion engine. As shown in FIG. 3B, an oil film pressure distribution is formed into two mountain-shaped distributions on the upper sliding surface 12. This is because the magnitude of the oil film pressure decreases depending on the distance to the surface of the rotating body, and thus at the portion where the oil groove 14 is formed, due to the distance from the rotating body being far, the oil film pressure does not rise and the oil film pressure partially drops at the portion. Accordingly, as can be seen by comparing FIG. 3A with FIG. 3B, the area of the oil film pressure distribution of the upper sliding surface 12 in which the oil groove 14 is formed clearly becomes smaller than that of the sliding surface 102 of the comparative example in which an oil groove is not formed. Therefore, as described in the description of related art of this specification, in a general slide bearing that is currently used, the trace of the shaft center of the rotating body is shifted toward the upper sliding surface side such that a force that the rotating body receives from the lower sliding surface and a force that the rotating body receives from the upper sliding surface are balanced.
FIG. 3C is a diagram showing an oil film pressure distribution in the axial direction, which is generated in the lower sliding surface 22 during the operation of the internal combustion engine. An oil groove is not formed on the lower sliding surface 22, and therefore, an oil film pressure distribution is not separated into two mountain-shaped distributions as in the upper sliding surface 12. Therefore, according to the lower sliding surface 22, it is possible to secure a high load capacity as compared with the upper sliding surface 12. On the other hand, the width $\gamma$ of the lower sliding surface 22 is smaller than the width $\alpha$ of the upper sliding surface 12, and therefore, the area of the oil film pressure distribution becomes smaller than that of the sliding surface 102 of the comparative example in which the width $\alpha$ of the sliding surface is the same and an oil groove is not formed. Therefore, according to the lower sliding surface 22, it is possible to lower the load capacity as compared with the sliding surface 102 of the general slide bearing that is currently used. That is, with the slide bearing 1 according to the embodiment of the invention, a load capacity having a magnitude that is not too high and not too low with respect to the load capacity of the upper sliding surface 12 can be secured on the lower sliding surface 22.
It can be seen that the operation and effects described above are particularly conspicuous in a case where the width $\gamma$ of the lower sliding surface 22 is within a certain range. FIG. 4 is a diagram showing the relationship between the width $\gamma$ of the lower sliding surface 22 and the minimum oil film thickness between the upper bearing body 10 and the rotating body, and the relationship between the width $\gamma$ of the lower sliding surface 22 and the minimum oil film thickness between the lower bearing body 20 and the rotating body.

As shown in FIG. 4, as the width $\gamma$ of the lower sliding surface 22 becomes larger, the minimum oil film thickness on the lower bearing body 20 side increases and on the contrary, the minimum oil film thickness on the upper bearing body 10 side decreases. This is because the trace of the shaft center of the rotating body is shifted toward the upper bearing body 10 side due to an increase in the load capacity of the lower sliding surface 22. Then, when the width $\gamma$ of the lower sliding surface 22 has increased to a certain extent, the minimum oil film thickness on the upper bearing body 10 side decreases to a minimum needed oil film thickness that is determined from the upper limit of allowable friction. The width $\gamma$ of the lower sliding surface 22 at this time is the upper limit of a preferred range. The upper limit of the preferred range of the width $\gamma$ of the lower sliding surface 22 is a width having a ratio of 0.9 with respect to the width $\alpha$ of the upper sliding surface 12.

Further, as shown in FIG. 4, as the width $\gamma$ of the lower sliding surface 22 becomes smaller, the minimum oil film thickness on the lower bearing body 20 side decreases, and on the contrary, the minimum oil film thickness on the upper bearing body 10 side increases. This is because the trace of the shaft center of the rotating body is shifted toward the lower bearing body 20 side due to a decrease in the load capacity of the lower sliding surface 22. Then, when the width $\gamma$ of the lower sliding surface 22 has decreased to a certain extent, the minimum oil film thickness on the lower bearing body 20 side decreases to the minimum needed oil film thickness that is determined from the upper limit of allowable friction. The width $\gamma$ of the lower sliding surface 22 at this time is the lower limit of the preferred range. As a result of consideration, it was confirmed that the lower limit of the preferred range of the width $\gamma$ of the lower sliding surface 22 is the difference between the width $\alpha$ of the upper sliding surface 12 and the width $\beta$ of the oil groove 14, that is, a width having a ratio of 0.9 with respect to the effective width of the upper sliding surface 12 excluding the oil groove 14.

From the above, a preferred range of the width $\gamma$ of the lower sliding surface 22 for obtaining the operation and effects described above is as represented by the following inequality.

$$(\alpha - \beta) * 0.9 < \gamma < \alpha * 0.9$$

3. Modification Examples of Structure of Slide Bearing

FIG. 5 is a cross-sectional view of a first modification example of the lower bearing body configuring the slide bearing according to the embodiment of the invention and corresponds to the cross-sectional view taken along line IIC-IIC of the lower bearing body 20 shown in FIG. 2C. As shown in this cross-sectional view, a lower bearing body 30 of the first modification example has cutouts 34 provided at both edge portions of a lower sliding surface 32. The cutouts 34 are provided along the circumferential direction of the lower bearing body 30. The cutouts 34 are provided, whereby the axial width $\gamma$ of the lower sliding surface 32 becomes narrower than the axial width $\alpha$ of an upper sliding surface (not shown).

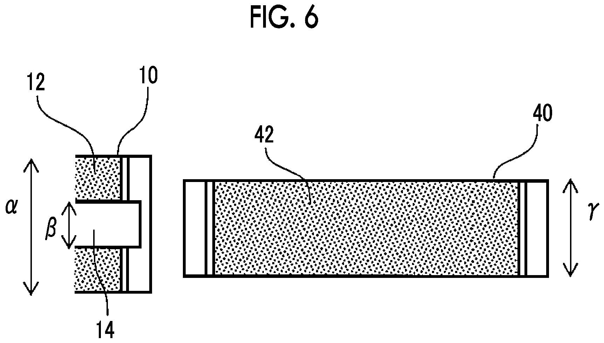

FIG. 6 is a plan view of a second modification example of the lower bearing body configuring the slide bearing according to the embodiment of the invention and corresponds to the plan view of the lower bearing body 20 shown in FIG. 2A. As shown in this plan view, the width of a lower bearing body 40 itself of the second modification example is narrower than the width of the upper bearing body 10. Therefore, the axial width $\gamma$ of a sliding surface 42 of the lower bearing body 40 is also narrower than the axial width $\alpha$ of the upper sliding surface 12.

**Claims**

1. A slide bearing (1) configured to support a crankshaft or a crankpin of an internal combustion engine, the slide bearing (1) comprising:

   a halved upper bearing body (10) which is disposed on an upper side in an up-and-down movement direction of a piston of the internal combustion engine and includes an upper sliding surface (12) having an upper oil groove (14) disposed along a circumferential direction of the upper sliding surface (12) at a central portion in an axial direction of the upper sliding surface (12); and
   a halved lower bearing body (20) which is disposed on a lower side in the up-and-down movement direction and includes a lower sliding surface (22) that configures, along with the upper sliding surface (12), a cylindrical sliding surface that rotatably supports the crankshaft or the crankpin through an oil film, an axial width ($\gamma$) of the lower sliding surface (22) being narrower than an axial width ($\alpha$) including the oil groove (14) of the upper sliding surface (12).

2. The slide bearing (1) according to claim 1, wherein the lower bearing body (20) has steps (24) provided along the circumferential direction at both edge portions in the axial direction of the lower sliding surface (22) of the lower bearing body (20).

3. The slide bearing (1) according to claim 1, wherein the lower bearing body (20) has cutouts (34) provided along the circumferential direction at both edge portions in the axial direction of the lower sliding surface (22) of the lower bearing body (20).

FIG. 1

# FIG. 2A

# FIG. 2B

# FIG. 2C

## FIG. 3A

## FIG. 3B

## FIG. 3C

## FIG. 4

## FIG. 5

# FIG. 6

Europäisches
Patentamt

European
Patent Office

Office européen
des brevets

# EUROPEAN SEARCH REPORT

Application Number

EP 17 20 1153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/136998 A1 (TAIHO KOGYO CO LTD [JP]) 1 September 2016 (2016-09-01) * paragraphs [0002], [0003]; claim 1; figures 2a, 2c * | 1-3 | INV. F16C9/02 F16C17/02 F16C33/04 F16C33/10 |
| X | WO 2016/136993 A1 (TAIHO KOGYO CO LTD [JP]) 1 September 2016 (2016-09-01) * figure 2c * | 1-3 | |
| X | JP H08 28570 A (NISSAN MOTOR) 2 February 1996 (1996-02-02) * claims 1,3; figure 4 * | 1 | |
| A | DE 27 11 983 A1 (DAIDO METAL CO LTD) 22 September 1977 (1977-09-22) * pages 2-6; figures 5-8 * | 1 | |
| A | WO 2016/089125 A1 (DOOSAN INFRACORE CO LTD [KR]) 9 June 2016 (2016-06-09) * claims 1,2; figure 4 * | 1 | |

| | |
|---|---|
| TECHNICAL FIELDS SEARCHED (IPC) | |
| F16C | |

The present search report has been drawn up for all claims

| Place of search | Date of completion of the search | Examiner |
|---|---|---|
| The Hague | 14 March 2018 | Frechard, Fabrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 1153

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | | Publication date | Patent family member(s) | | Publication date |
|---|---|---|---|---|---|
| WO 2016136998 | A1 | 01-09-2016 | CN | 107407330 A | 28-11-2017 |
| | | | EP | 3263930 A1 | 03-01-2018 |
| | | | JP | 6178354 B2 | 09-08-2017 |
| | | | JP | 2016161015 A | 05-09-2016 |
| | | | KR | 20170118906 A | 25-10-2017 |
| | | | US | 2018031031 A1 | 01-02-2018 |
| | | | WO | 2016136998 A1 | 01-09-2016 |
| WO 2016136993 | A1 | 01-09-2016 | CN | 107250580 A | 13-10-2017 |
| | | | EP | 3263928 A1 | 03-01-2018 |
| | | | JP | 2016161013 A | 05-09-2016 |
| | | | KR | 20170122222 A | 03-11-2017 |
| | | | US | 2018031032 A1 | 01-02-2018 |
| | | | WO | 2016136993 A1 | 01-09-2016 |
| JP H0828570 | A | 02-02-1996 | NONE | | |
| DE 2711983 | A1 | 22-09-1977 | DE | 2711983 A1 | 22-09-1977 |
| | | | GB | 1545369 A | 10-05-1979 |
| | | | JP | S52113445 A | 22-09-1977 |
| | | | US | 4105267 A | 08-08-1978 |
| WO 2016089125 | A1 | 09-06-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005249024 A